## Europäisches Patentamt
## European Patent Office
## Office européen des brevets

(11) Publication number: **0 223 445**
**B1**

# EUROPEAN PATENT SPECIFICATION

(45) Date of publication of the patent specification:
28.11.90

(51) Int. Cl.⁵: **B01J 2/20**, C04B 35/00, B01J 35/02, B01J 37/00

(21) Application number: 86308349.9

(22) Date of filing: 27.10.86

(54) Refractory oxide shaped articles.

(30) Priority: 08.11.85 GB 8527661

(43) Date of publication of application:
27.05.87 Bulletin 87/22

(45) Publication of the grant of the patent:
28.11.90 Bulletin 90/48

(84) Designated Contracting States:
AT BE CH DE ES FR GB GR IT LI LU NL SE

(56) References cited:
DE-B- 1 301 539
GB-A- 1 133 983
GB-A- 2 064 419
GB-A- 2 064 419
GB-A- 2 118 062
US-A- 2 881 503
US-A- 2 934 987
US-A- 2 934 987
US-A- 4 097 566
US-A- 4 250 130

(73) Proprietor: IMPERIAL CHEMICAL INDUSTRIES PLC,
Imperial Chemical House, Millbank, London
SW1P 3JF(GB)

(72) Inventor: Davidson, Peter John, 25 The Green,
Hurworth-on-Tees Darlington DL2 2AA(GB)
Inventor: Davidson, John Frank, 5 Luard Close,
Cambridge CB2 2PL(GB)
Inventor: Kirk, Frank Alfred, Crawford House,
Easingwold York Y06 3HY(GB)
Inventor: Ralph, Donald Leslie, 51 Malvern Road,
Billingham Cleveland(GB)

(74) Representative: Gratwick, Christopher et al, Imperial
Chemical Industries PLC Legal Department: Patents PO
Box 6 Bessemer Road, Welwyn Garden City Herts,
AL7 1HD(GB)

## Description

This invention relates to refractory shaped articles suitable for use as catalyst supports, catalyst precursors, absorbents or adsorbents and in particular to their production by an extrusion process. Refractory articles are widely used as adsorbents, absorbents or as supports for catalytically active materials for use in various catalytic processes. Other refractory compositions e.g. iron oxide compositions are themselves useful as catalyst precursors; the active catalyst can be produced from such precursors by reduction.

One known method, see for example EP-A 134 138, shaped articles involves extruding a composition containing a particulate material through a die to give a green extrudate of the requisite cross-section and then calcining the green extrudate to remove volatiles and to bond the particles together. The articles are often required in discrete pieces and so the extrudate has to be cut to the appropriate length, which may be as little as 2 mm or may be up to 50 mm or more. Because green extrudates are deformable, it has generally been necessary to effect cutting after calcination: consequently, because of the refractory nature of the calcined extrudate, relatively slow cutting techniques, e.g. employing diamond-edged saws, have to be employed. Cutting after calcination also causes problems with dust formation and inevitably involves some wastage.

However it has been proposed in GB-A 2 064 419 to employ a technique known as water jet cutting for cutting green ceramic extrudates. In this reference the ceramic material is extruded horizontally on to a transport device and is cut by a high velocity water jet acting as a knife to slice through the extrudate. Water jet cutting of green ceramic extrudates avoids the significant distortion and deformation of the green extrudate pieces that tend to be caused by conventional cutting techniques such as those employing wires or guillotines.

We have found that if the extrudate is horizontal and cut vertically with the water jet, there may be a tendency for the cut pieces to adhere together giving rise to the possibility of distortion when the pieces are subsequently separated from one another.

It is therefore desirable for the extrudate to be suspended vertically and cut horizontally with the jet. This enables the cut extrudate pieces to fall away from the end of the continuous extrudate. Removal of the cut pieces from the cutting zone is usefully assisted by an air jet.

However extrusion vertically downwards from an extrusion die to the cutting station is liable to result in significant draw down of the extrudate by the weight of the length of green extrudate hanging between the die and the cutting station.

In the present invention this problem is overcome by extruding the extrudate horizontally and then, while supported on a transport device, turning the extrudate through 90° to the vertical position prior to the cutting position.

Accordingly the present invention provides a method of making refractory shaped articles comprising:

a) extruding an extrudable composition containing a refractory particulate material horizontally through a die to give a continuous, deformable, green extrudate, receiving the extrudate on a driven transport device, and, while supported on said transport device, turning said extrudate through 90° so that the free end of the extrudate hangs vertically downwards;

b) cutting the extrudate, while vertically suspended and still in the green, deformable, state into lengths with a high velocity water jet; and thereafter

c) calcining the cut lengths to remove any volatile material and to bind together the oxidic particulate material.

The water jet cutting technique involves directing at the extrudate a jet of water of thickness suitably in the range 0.05 to 0.3 mm at a high velocity, normally exceeding the speed of sound; and suitably in the range 300 to 1000 m.s$^{-1}$. In some cases it may be desirable that the water has dissolved therein a small concentration, typically 0.1 to 0.5% by weight of a hydrophilic polymer, such as a polyacrylamide, which stabilises the water jet. The high velocity water jet is conveniently produced by forcing the water under high pressure, typically in the range 1000 to 4000 bar abs., through a fine orifice. The high pressure is suitably attained in a two stage system comprising a booster pump to raise the pressure to 3 to 6.5 bar abs. and an intensifier pump, such as a hydraulically driven reciprocating plunger pump, to raise the pressure to the requisite high pressure.

Surprisingly, despite the deformable nature of the green extrudate, high velocity water jet cutting effects little or no deformation or distortion of the extrudate. This is of particular importance where the extrudate has thin walls, i.e. less than 2 mm, and/or narrow passages, e.g. of 2 mm or less, especially less than 1 mm, cross section dimension, therethrough since any significant distortion would tend to reduce the mechanical strength of the article and/or affect the free flow of material through such passages when the shaped article is used, e.g. for catalytic reactions.

The particulate material of the extrudable composition should include those ingredients necessary to provide the mechanical form and strength of the support and/or the precursor to the catalytically active material, absorbent, or adsorbent. Particularly suitable materials include alumina, silica, titania, zinc oxide, zirconia, magnesia, chromia, yttria, rare earth oxides, actinide oxides; solid solutions thereof (e.g. stabilised zirconia); multiphase combinations of oxides (e.g. partially stabilised zirconia, transformation toughened alumina); compound oxides such as magnesia alumina spinel, aluminium titanate, mullite, magnesium aluminium titanate, calcium aluminate, barium titanate, cordierite, and zeolites; and zinc carbonate. Also suitable are non-oxidic materials such as carbon, e.g. activated carbon, silicon carbide, sialon, silicon nitride, and multiphase combinations, or the precursors thereof. In some cases combinations of oxidic and non-oxidic materials may be employed, e.g. silica and carbon to produce silicon carbide after sintering, or mixtures of activated carbon and bentonite. Oxidic material that are of use as catalyst precursors or as catalysts per se include magnetite, haematite, nickel oxide, copper oxide, cobalt oxide, and cobalt molybdate. Where the oxidic material forming the major proportion of the extrudable composition is itself a catalytic material or precursor thereto, the extrudable composition will often contain one or more other oxidic materials, such as the above mentioned support or a rare earth, to act as a stabiliser to minimise sintering of the catalytic material during use.

To provide an extrudable consistency the composition usually contains a liquid and a viscosity-modifying polymer soluble or swellable in the liquid. If the liquid is water, which is preferred, the polymer can comprise for example, a soluble carbohydrate such as starch, alginate or xanthan gum; a cellulose ether; a protein; a polyvinyl alcohol, ester, acetal, or ether or mixed derivative e.g. a partially hydrolysed polyvinyl acetate; a polyalkylene oxide; a polyacrylate or methacrylate; or polyacrylamide or polymethacrylamide. Polymer mixtures may be employed. If the liquid is organic, for example a polyol such as glycol or glycerol, numerous organic polymers are suitable, for example polyolefins of high molecular weight (over 150000) with a plasticiser such as polyol or high boiling ester as the liquid.

Particularly suitable compositions are disclosed in EP-A-134138. As a further alternative the extrudable consistency can be due to a water-swellable inorganic compound oxide, for example a clay mineral such as bentonite or colloidal magnesium aluminium silicate sold under the trade name Vee Gum T.

In an important class of extrudable compositions the oxidic material is a hydraulic cement. Suitable extrudable hydraulic cement compositions are described in EP-A-55035.

The extrusion die typically provides an extrudate having one of the following cross-sectional shapes: circles or ovals; re-entrant figures such as lobed figures, typically having 2 - 4 lobes, eg a "cloverleaf configuration, triangles projecting from a circle or "cog wheels"; concentric circles, thus producing a single hole cylindrical product; circles with a plurality of inscribed small circles, thus producing a cylindrical product with a plurality of longitudinal bores there-through; circles with a plurality of radii, typically 2 -8, especially 3, 5 or 7 radii, thus producing products of the type commonly termed "waggon-wheels; circles with at least 3 symmetrically disposed intersecting non-diametral chords, thus producing a "partitioned ring" product; and a honeycomb, preferably with at least 9 openings per cm², each opening being of triangular, square, or hexagonal configuration.

The process is of particular utility in the production of of cylindrical products having a plurality, e.g. 10 or more, of fine through passages, particularly passages of diameter below 1.5, more particularly below 1, mm.

The dimensions of the shaped article will depend on the intended use of the product: for use in randomly packed beds, the maximum overall dimension, ie the length, diameter etc., will generally be below 50 mm while the minimum overall dimension will generally be above 1.5 mm.

For fixed beds however larger products can be used as a monolith, eg honeycombs of cross-sectional dimensions at least 25 mm and preferably at least 50 mm. Such a honeycomb may have a maximum cross-sectional dimension of up to about 300 mm or more.

However the best results in terms of distortion-free cutting have been achieved where the maximum cross-sectional dimension is below 25 mm.

Dies suitable for the production of extrudates having through passages will usually have a spider supporting cores, or more conveniently, a single block construction with primary and secondary channels, eg as described in our US-A-3824196, or a plate-bundle construction.

After extrusion, the extrudate is cut as aforesaid to the desired lengths and is calcined to remove any volatile or combustible material and to bond the particles of the refractory material together. Such a calcining step may be performed in stages. Thus where the extrudable composition contains a volatile liquid, eg water, the extrudate pieces may first be dried, typically at under 200°C, especially at under 100°C, with care to avoid non-uniformity of heating and consequent strains. If desired over-rapid drying can be avoided by controlling the relative humidity of the drying atmosphere at a high level, for example at over 50%, especially over 70%. This applies especially where the extrudable composition contains water and a polymer in an amount of less than 10% by weight of the oxidic material, but analogous treatment is possible when the extrudable composition contains an organic liquid.

Drying by the use of a dielectric or microwave heater is also effective.

Where the refractory material is a hydraulic cement, curing of the latter may take place prior to, or during such a drying step, eg by heating the extrudate under conditions of controlled relative humidity prior to volatilising residual water.

The calcination step usually includes treatment at 200 to 700°C in air to decompose and/or burn out any organic components, eg polymeric material added to aid extrusion. Where the binder is not harmful in the final product, it is not necessary to remove it by calcination.

Further calcination, typically at temperatures up to 1600°C may be employed as necessary, as is known in the art, to effect bonding of the particles. Thus if the particulate material is already of the high temperature type such as alpha alumina, or is to be converted thereto, calcination at temperatures typically in the range 1000-1600°C may be carried out.

The same applies if compound oxides, for example magnesia alumina spinel, or cordierite are employed.

Where it is desired to effect phase changes in the material during the calcination, the calcination cycle should contain dwell times in the temperature regions appropriate to the desired phase change. It may also be desirable to effect changes in the surrounding atmosphere, e.g. from oxidising, i.e. air, to an inert or in some cases, reducing atmosphere or to include steam, in order to effect desired mineralogical changes in the product.

Where the particulate material of the extrudable composition does not already contain material that forms, or is convertible to, the desired catalytically active or adsorbent, or absorbent material, after calcination the support may be impregnated or coated with the active material or with a material that is convertible thereto, e.g. by heating and/or chemical reaction e.g. reduction.

The active material, or material convertible thereto, will of course depend on the nature of the process for which the shaped articles are to be used. Examples of catalytically active materials, or materials convertible thereto, include iron, nickel, copper, silver, rare earth, and precious metal compounds.

It is often desirable that the cut lengths of the extrudate have ends substantially perpendicular to the length of the extrudate. To achieve this it may be desirable to move the water jet in unison with the extrudate as the cut is king made.

For some applications, particularly where the product pieces are to be used as random packings in relatively narrow vessels, eg tubes, the uniformity of the lengths of the cut extrudate pieces may be important. Since the extrusion rate may be subject to significant variation, either of a periodic or random nature, merely making cuts at uniform times may not give adequate uniformity of the cut lengths.

We have found that by using a transport device as aforesaid in conjunction with horizontal extrusion, compensation for extrusion rate variation can be achieved. Thus by arranging that the frequency of operation of the cutting apparatus is dependant on the rate of movement of the transport device, the uniformity of the cut lengths can be improved: however we have found that, because of the inertia of the transport device, the movement of the latter may not accurately reflect the extrusion rate if the transport device is simply a moveable support, e.g. wheel or belt, whose movement is effected by the extrudate. Thus in the present invention, the transport device is positively driven, preferably at a rate coupled to the actual rate of extrusion.

It is known from US-A-2934987 to compensate for variation in extrusion rate when cutting an extrudate at a cutting station spaced from the extruder by employing a sensor to monitor the degree of sag of the extrudate in the space between the extruder and the cutting station and using a signal from this sensor to control the cutting frequency.

In a preferred form of the present invention, compensation for extrusion rate variation can be achieved by an adaptation of the principle of the aforesaid US-A-2934987. Thus a space may be provided between the die and the transport device into which the extrudate sags slightly: the degree of sag is monitored by sensors which control the drive to the transport device. Thus two sensors displaced vertically with respect to one another may be provided. When the lower sensor is actuated by the extrudate sagging to the level of the lower sensor, thus indicating an increased extrusion rate, the transport device movement rate is increased. Likewise if the extrusion rate is reduced, the extrudate between the die and the transport device will sag to a lesser extent until the upper sensor is actuated whereupon the transport device movement rate is reduced.

It will be appreciated that with this arrangement the transport device movement may be arranged to be intermittent so that the cut can be made on a stationary part of the extrudate. In this way movement of the cutting device in the direction of travel of the extrudate in order to obtain perpendicular ends to the cut extrudate is not necessary. Thus in this arrangement the transport advances a predetermined length past the cutting station with each movement of the transport device: the frequency of the transport device movements and of the operation of the cutting device are determined by the rate of extrusion as monitored by the sensors.

It is however preferred to effect continuous transport of the extrudate and to move the water jet in unison with the extrudate to effect a perpendicular cut.

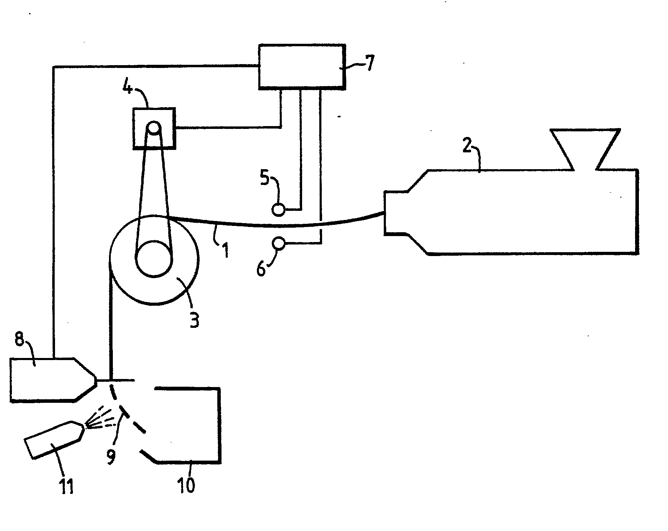

The invention is illustrated by the following example in which apparatus of the type shown diagrammatically in the accompanying drawing was employed.

In the Figure an extrudate 1 is extruded horizontally from an extruder 2 and is received by a transport device in the form of a wheel 3 driven by a motor 4. Two optical sensors 5,6 are positioned one above the other with one sensors, 5, above the extrudate 1 and one sensor, 6, below the extrudate 1 in the space between the extruder 2 and wheel 3.

Signals from sensors 5 and 6 are fed to a control unit 7 which controls motor 4.

The extrudate 1 is turned through 90° by wheel 3 so that it travels vertically downwards where it is cut into discrete lengths by a water jet cutter 8 which is arranged to move, by means not shown, in a figure of eight pattern. The movement of cutter 8 is also controlled by control unit 7 so that the cutter moves, during the cutting operation, in unison with the extrudate 1.

The cut pieces 9 of the extrudate are directed from the cutting zone to a receiver 10 by a jet of compressed air from a supply 11.

The invention is illustrated by the following Examples.

EXAMPLE 1

10 kg of α-alumina (ALCOA A14 - 325 grade) 0.6 kg of microcrystalline cellulose (AVICEL PH 101) and 0.5 kg of a commercial extrusion aid, a polysaccharide (Zschimmer and Schwarz KP 1075) were mixed, thoroughly, in a paddle mixer. 4 litres of dimineralised water was added as a fine spray to the powder whilst still stirring in the mixer. The wetted powder was passed three times through a 50 mm mincing machine to produce a uniform, plastic mass. The composition was screw extruded on a 2" BCRA/MALKIN machine through a die having an outlet diameter of 8.5 mm and provided with 7 suspended cores each of 1.2 mm dia. Extrusion rates were in the range 3-6 gm. sec.$^{-1}$ depending upon the auger speed. The extrusion was horizontal and the green extrudate was received by a driven wheel approximately 400 mm dia with a vee-groove around its circumference. The wheel was so positioned to support the extrudate and turn it through 90° into the vertically downwards direction and through the cutting zone. The vertical centre-line of the wheel was spaced 150 mm from the die-face so that the extrudate was able to sag into the space between the die and the wheel. The degree of sag was monitored by optical sensors vertically displaced relative to one another by approximately 20 mm. The sensors thus actuated the drive to the wheel to maintain the degree of sag in the range approximately 4 - 16 mm.

At the cutting zone, the extrudate was cut by a jet of water directed horizontally at the extrudate. The jet was produced from a sapphire nozzle having a bore of 0.13 mm using a water pressure of 2800 bar. An air jet was used to direct the cut pellets away from the cutting zone. The nozzle was mounted in a reciprocating mechanism which moved it in a shallow figure of eight path across the extrudate and back at intervals: the reciprocating movement was in unison with the rate of movement of the extrudate so that a perpendicular cut was made. The frequency of operation of the reciprocating mechanism was determined by the rate of rotation of the wheel. The cut pieces of extrudate had a length of 8 mm with a uniformity of ±3%. the cut pieces of extrudate were free of flashes and distortion and there was no blockage in any of the longitudinal through holes despite their small diameter.

The cut pieces of extrudate were dried in an oven at 95°C and then fired according to the following cycle:-

Room temperature to 400°C at a heating rate of 100°C hr$^{-1}$, maintained at 400°C for 4 hours, then heated at a rate of 100°C hr$^{-1}$ to 1400°C and maintained at that temperature for 2 hours followed by cooling at the natural rate of the furnace.

The resulting catalyst support units can be converted to catalyst pieces by application of an active compound such as copper chloride or silver nitrate or by application of a precursor compound such as copper oxide, nickel oxide, or palladium nitrate followed by reduction to give catalytically active material.

## EXAMPLE 2

A particulate composition was made by mixing about 95% by weight of haematite powder, about 3% by weight of alumina trihydrate powder, about 1% by weight of calcium carbonate, and about 1% by weight of magnesium aluminate spinel. Each of the ingredients had been ground to a fine particle size, median particle size about 3 μm and essentially all the particles below 10 μm. To the particulate mixture there was added about 1% by weight of potassium carbonate, about 1% by weight of a high molecular weight polysaccharide, and about 4% by weight of corn starch, all based on the weight of the particulate mixture. To the particulate mixture was then added about 11-12% by weight, based on the weight of the particulate mixture of water. The resultant composition was mixed to give a homogeneous paste.

The resultant paste was extruded at room temperature using a die of circular cross section about 9 mm having 50 suspended wire cores arranged in three concentric rings of 29, 14, and 6 cores, around a central core; the wires were about 0.5 mm diameter.

The extrusion and cutting of the extrudate was effected as described in Example 1. The extrudates, of length about 8.5 mm, were free of flashes, showed no distortion, and exhibited no blocking of any of the 50 through passages.

The extruded pieces were dried, calcined, and sintered by the procedure of Example 1 using a sintering temperature of 1300°C. The resultant sintered units which had a diameter of about 8.5 mm and 50 through passages of diameter about 0.48 mm, were suitable for use as ammonia synthesis catalyst precursors.

## Claims

1. A method of making refractory shaped articles comprising:
   a) extruding an extrudable composition containing a refractory particulate material horizontally through a die to give a continuous, deformable, green extrudate (1), and receiving the resulting extrudate (1) on a driven transport device (3);
   b) cutting the extrudate (1), while still in the green, deformable, state into lengths with a high velocity water jet (8); and thereafter
   c) calcining the cut lengths to remove any volatile material and to bind together the particulate material;
   characterised by
   i) turning said extrudate (1), while supported on said transport device (3), through 90° so that the free end of the extrudate (1) hangs vertically downwards; and
   ii) effecting said cutting of the extrudate (1) while the latter is so vertically suspended.

2. A method according to claim 1 wherein the extrudate (1) has walls of thickness less than 2 mm and/or through passages of less than 2 mm cross section dimension.

3. A method according to claim 1 or claim 2 wherein the transport device (3) is positively driven at a rate coupled to the actual rate of extrusion.

4. A method according to claim 3 characterised in that the extrudate (1) is extruded at such a rate that the extrudate (1) sags into a gap between the die and the transport device (3), the degree of sag of the extrudate (1) into the gap is sensed, the rate of movement of the transport device (3) is controlled to maintain the degree of sag within predetermined limits, and the vertically suspended extrudate (1) is cut at a frequency of operation depending on the rate of movement of the transport device (3).

5. A method according to any one of claims 1 to 4 wherein the extrudate (1) is transported continuously and the water jet (8) is moved in unison with the extrudate (1) to effect a perpendicular cut through the extrudate (1).

## Patentansprüche

1. Verfahren zur Herstellung feuerfester Formkörper, bei dem

a) eine extrudierbare Masse, die eine feuerfeste teilchenförmige Substanz enthält, waagerecht durch ein Mundstück extrudiert wird, um ein kontinuierliches, verformbares grünes Extrudat (1) zu erhalten, und das erhaltene Extrudat (1) auf eine angetriebene Transporteinrichtung (3) aufgenommen wird:

b) das Extrudat (1), während es sich noch im verformbaren grünen Zustand befindet, mit einem Wasserstrahl (8) hoher Geschwindigkeit in Stücke zerschnitten wird und danach

c) die abgeschnittenen Stücke calciniert werden, um jede flüchtige Substanz zu entfernen und die teilchenförmige Substanz zu verbinden;

dadurch gekennzeichnet, daß

i) das Extrudat (1), während es auf der Transporteinrichtung (3) getragen wird, um 90° gedreht wird, so daß das freie Ende des Extrudats (1) senkrecht nach unten hängt; und

ii) das Zerschneiden des Extrudats (1) durchgeführt wird, während das Extrudat (1) auf diese Weise senkrecht aufgehängt ist.

2. Verfahren nach Anspruch 1, bei dem das Extrudat (1) Wände mit einer Dicke von weniger als 2 mm und/oder Durchgänge mit einer Querschnittsabmessung von weniger als 2 mm hat.

3. Verfahren nach Anspruch 1 oder Anspruch 2, bei dem die Transporteinrichtung (3) mit einer Geschwindigkeit, die mit der tatsächlichen Extrudiergeschwindigkeit gekoppelt ist, zwangsläufig angetrieben wird.

4. Verfahren nach Anspruch 3, dadurch gekennzeichnet, daß das Extrudat (1) mit einer derartigen Geschwindigkeit extrudiert wird, daß das Extrudat (1) in einen Zwischenraum zwischen dem Mundstück und der Transporteinrichtung (3) durchhängt; daß der Durchhangsgrad des Extrudats (1) in den Zwischenraum gemessen wird; daß die Bewegungsgeschwindigkeit der Transporteinrichtung (3) derart gesteuert wird, daß der Durchhangsgrad in festgelegten Grenzen gehalten wird; und daß das senkrecht aufgehängte Extrudat (1) mit einer von der Bewegungsgeschwindigkeit der Transporteinrichtung (3) abhängigen Arbeitsfrequenz zerschnitten wird.

5. Verfahren nach einem der Ansprüche 1 bis 4, bei dem das Extrudat (1) kontinuierlich transportiert wird und der Wasserstrahl (8) in Übereinstimmung mit dem Extrudat (1) bewegt wird, um ein Durchschneiden des Extrudats (1) im rechten Winkel zu bewirken.

## Revendications

1. Procédé de préparation d'articles façonnés réfractaires, comprenant :

(a) l'extrusion d'une composition extrudable contenant un matériau particulaire réfractaire, horizontalement à travers une filière pour donner un extrudat (1) vert déformable continu et la réception de l'extrudat résultant (1) sur un dispositif de transport entraîné (3) ;

(b) la découpe de l'extrudat (1) en longueurs alors qu'il est encore à l'état vert déformable, avec un jet d'eau (8) de vitesse élevée ; et ensuite

(c) la calcination des longueurs découpées pour éliminer la matière volatile et lier ensemble le matériau particulaire,

caractérisé en ce que :

(i) l'extrudat (1) est tourné d'un angle de 90° alors qu'il est soutenu sur le dispositif (3) de transport, de telle sorte que l'extrémité libre de l'extrudat (1) pend verticalement vers le bas ; et

(ii) la découpe de cet extrudat (1) est effectuée alors que celui-ci est ainsi suspendu verticalement.

2. Procédé suivant la revendication 1, caractérisé en ce que l'extrudat (1) a des parois ayant une épaisseur inférieure à 2 mm et/ou des passages traversants ayant une section droite inférieure à 2 mm.

3. Procédé suivant la revendication 1 ou 2, caractérisé en ce que le dispositif de transport (3) est entraîné positivement à une vitesse couplée à la vitesse réelle de l'extrusion.

4. Procédé suivant la revendication 3, caractérisé en ce que l'extrudat (1) est extrudé à une vitesse telle que l'extrudat (1) s'affaisse dans un espace entre la filière et le dispositif (3) de transport, le degré de l'affaissement de l'extrudat (1) dans cet espace est détecté, la vitesse du mouvement du dispositif de transport (3) est contrôlée pour maintenir le degré d'affaissement entre des limites prédéterminées, et l'extrudat (1) suspendu verticalement est découpé à une fréquence de fonctionnement qui dépend de la vitesse du mouvement du dispositif (3) de transport.

5. Procédé suivant l'une quelconque des revendications 1 à 4, caractérisé en ce que l'extrudat (1) est transporté en continu et que le jet d'eau (8) est déplacé à la même vitesse que l'extrudat (1) pour effectuer une découpe perpendiculaire à travers l'extrudat (1).